# EUROPEAN PATENT SPECIFICATION

(11) **EP 1 725 798 B1**
(45) Date of publication and mention of the grant of the patent: **05.11.2008**
(21) Application number: 05725816.2
(22) Date of filing: 17.03.2005
(51) Int. Cl.: F16K 31/04

(54) **VALVE FOR REDUCING WATER HAMMER**
VENTIL ZUR VERRINGERUNG VON WASSERSCHLAG
VANNE DE REDUCTION DE COUP DE BELIER

(30) Priority: 17.03.2004 US 802439
(43) Date of publication of application: 29.11.2006
(73) Proprietor: Honeywell International Inc., Morristown NJ 07960 (US)
(72) Inventor: MORRISON, William, Toronto, Ontario (CA)
(74) Representative: Hucker, Charlotte Jane
(86) International application number: PCT/US2005/008911
(87) International publication number: WO 2005/090842

(56) References cited:
- US-A- 3 872 363
- US-A- 4 595 081
- US-A- 5 662 542
- US-A1- 2002 170 786
- PATENT ABSTRACTS OF JAPAN vol. 1999, no. 13, 30 November 1999 (1999-11-30) & JP 11 218248 A (NICHIDEN KOGYO KK), 10 August 1999 (1999-08-10)
- PATENT ABSTRACTS OF JAPAN vol. 1997, no. 11, 28 November 1997 (1997-11-28) & JP 09 196216 A (HITACHI VALVE KK), 29 July 1997 (1997-07-29)

## Description

### Technical Field

The present invention relates generally to water delivery and water circulation systems, and more particularly, to water delivery and water circulation systems that use valves.

### Background

Water delivery and water circulation systems are commonly used today in a wide variety of applications. For example, buried sprinkler systems are commonly used to irrigate lawns and other plants in both residential and commercial settings. Fire prevention sprinkler systems are commonly installed in buildings to help prevent the spread of fires. Water circulation systems are commonly used to heat and/or cool both residential and commercial buildings. These are just a few examples of water delivery and water circulation systems.

Water delivery and water circulation systems often include a network of pipes. In many cases, one or more valves are used to control the water flow through all of part of the pipes of the distribution network. In some cases, the network of pipes is broken up into zones, where some or all of the zones can be independently controlled by one or more corresponding valves. As is known, when one of these valves closes quicldy, the sudden interruption in water flow can cause a loud noise commonly referred to as water hammer, which is undesirable in most instances.

The valves used to control the water flow can often be reversibly opened and closed to permit or prevent water flow. The valves sometimes can be opened and closed manually, or opened and closed automatically. Automatic control valves in use today often include a motor or solenoid that can be energized to open and/or close the valve. In some instances, the motor can operate the valve in one direction, and a biasing element such as a spring or the like is used to return the valve to its original position when power is removed from the motor. Quick operation of the valve is desired for responsiveness but solenoid valves often cause the water hammer mentioned above, which can create a preference for rapid opening motorized valves.

In one example, a valve can be constructed such that the motor is energized to open the valve, and springs are used to close the valve when power is removed from the motor. In this configuration, if power fails, the valve closes and no water flows through the valve. In other cases, such as in heating applications where an inadvertent lack of heat could be undesirable or even hazardous, the valve may be constructed such that the motor is energized to close the valve, and the springs are used to open the valve when power is removed from the motor.

In either case, the valves are typically controlled by a controller. In heating and/or cooling applications, for example, the controller may be a thermostat. The controller can be a simple device merely providing on/off control in response to a temperature difference between ambient temperature and a temperature set point Other controllers may be programmable, and can thus be programmed to follow a preprogrammed temperature profile that can include multiple daily temperature set points. In any event, the controller can instruct the values when to open and close to achieve the desired result.

US-A-2002/0170786 describes an opening mechanism for operating an actuating member which is provided with an electric motor, a resetting spring and a centrifugal brake, wherein the actuating member can be operated in a first direction of movement by the electric motor activated by means of a control or regulating device, and in a second direction of movement by means of the resettting spring. A brake body of the centrifugal brake is arranged on the rotor of the electric motor. The centrifugal brake arranged directly on the rotor can be configured such that a braking effect is generated only when the actuating member is operated by the resetting spring. When operated by the switched-on electric motor on the other hand, the centrifugal brake has no braking effect. By means of the centrifugal brake the speeds that can be reached are limited to the extent that no spurious vibrations and noises occur.

US-A-5662542 describes an actuator assembly for valves in heating, ventilation and air-conditioning systems, which includes an electric drive, a reduction gearing having a return spring tensionable by the actuating movement and serving for the spring return movement, a clutch between the electric drive and the reduction gearing, and a brake device actuated during the spring return movement. The brake device takes the form of a centrifugal brake having a fixed brake drum and a rotatably mounted brake shoe carrier on which brake shoes movable radially by centrifugal force are disposed. The brake shoe carrier serves as the clutch member on the gearing side and has a journal having an end pinion engaging in the reduction gearing. The clutch member on the drive side is rotatably mounted on the journal of the brake shoe carrier.

Often times, the valve will be instructed to close while water is flowing through the valve. As noted above, when a valve is closed quickly, the sudden interruption in water flow can cause rapid changes in system pressure resulting water hammer, which is undesirable in most instances. Besides the acoustic disturbance, water hammer can result in pipe failure and floods in some cases. Some solutions to water hammer have been proposed. For example, one proposed solution in hydronic heating systems is to simply shut off the water pump that provides the water flow before the valves are closed. This solution, however, requires additional thermostat involvement and is not feasible if water flow must continue in other parts (e.g. zones) of the system. In addition, in potable water systems, water pressure is not provided by a pump that can be selectively deactivated. Rather, the water is provided by a municipal water source where the water pressure is provided by an unregulated mechanical pressure tank.

Consequently, a need remains to lessen or eliminate water hammer in water delivery and/or water circulation systems. In addition, a need remains for a convenient way to lessen or eliminate water hammer in currently installed water delivery and/or water circulation systems.

### Summary

According to the present invention, an actuator assembly is defined in claim 1.

In one illustrative embodiment, the motor is used to drive a valve to an open position, and one or more springs of the actuator assembly are used to drive the valve back to the closed position. In other embodiments, the motor may be used to drive the valve to the closed position, and one or more springs may be used to drive the valve to the open position. In any event, and in one illustrative embodiment, the motor may include a brake that helps reduce or limit the rotational velocity of the motor when the one or more springs are driving the valve back to the return position. In other embodiments, the actuator assembly or valve may include a brake to help reduce or limit the return speed of the valve, if desired.

It is contemplated that the brake may include, for example, a governor that uses friction to limit return speed, a governor that uses magnetic forces to limit return speed, a transmission that changes the gearing ratio of the actuator assembly depending on the direction of movement, an electrical or electronic control method that reduces or limits the rotational return velocity of the motor, or any other suitable brake that can be introduced into the system, as desired.

The present invention may also be applied to damper actuators used to actuate air dampers within air ducts. The reduced return speed of the motor may, for example, reduce the return speed of the air damper, which may not only help reduce wear on the damper actuator, but may also help reduce damper blade speed for safety reasons.

The above summary of the present invention is not intended to describe each disclosed embodiment or every implementation of the present invention. The Figures and Detailed Description which follow more particularly exemplify these embodiments.

### Brief Description of the Figures

The invention may be more completely understood in consideration of the following detailed description of various embodiments of the invention in connection with the accompanying drawings, in which:
Figure 1 is a perspective view of a valve assembly including a valve and an actuator assembly in accordance with an embodiment of the present invention;
Figure 2 is a perspective view of the valve of Figure 1;
Figure 3 is a perspective view of a valve in accordance an embodiment of the present invention;
Figure 4 is an exploded perspective view of the actuator assembly of Figure 1;
Figure 5 is a perspective view of an actuator motor in accordance with an embodiment of the present invention; and
Figure 6 is a top view of the actuator motor of Figure 5.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all passive and active modifications, equivalents, and alternatives falling within the spirit and scope of the invention.

### Detailed Description

The following description should be read with reference to the drawings, in which like elements in different drawings are numbered in like fashion. The drawings, which are not necessarily to scale, depict selected embodiments and are not intended to limit the scope of the invention. Although examples of construction, dimensions, and materials are illustrated for the various elements, those skilled in the art will recognize that many of the examples provided have suitable alternatives that may be utilized.

The following description relates particularly to an illustrative water heating and/or cooling system. However, it should be recognized that the present invention may be used to lessen or prevent water hammer in any type of water delivery and/or water circulation systems, as desired.

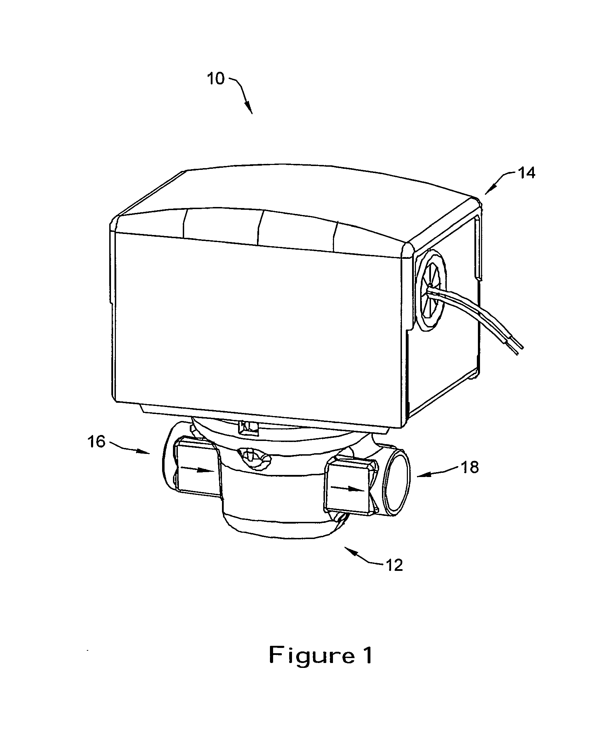

Figure 1 is a perspective illustration of a valve assembly 10 that includes a valve 12 and an actuator assembly 14. Valve 12 may be any type of valve such as a gate or ball valve, a plug or globe valve, or any other type of valve. In the illustrative embodiment, the valve 12 can be opened or closed to permit or stop water flow through valve 12. Valve 12 has a valve stem that can be operatively secured to actuator assembly 14, as will be discussed in greater detail below. Actuator assembly 14 includes structure useful in actuating the valve stem of valve 12 to move between open and closed positions in response to a command signal from a controller, such as a thermostat.

In the illustrative embodiment, valve assembly 10 can be employed in heating and cooling systems. In a heating system, a heat source such as a gas-fired or electric boiler is typically used to heat water to a suitable temperature and a pump or other motive source is used to pump the heated water through a distribution network of pipes to one or more radiators, hot water baseboard heaters, encapsulated tubing such as in a radiant floor system, and/or the like. The distribution network can include water lines or pipes that extend from the heat source to one or several radiators and the like. In some embodiments, the distribution network can be deployed in a larger building such as an apartment or condominium building and can involve a large number of radiators, baseboard heaters or radiant floor systems, and in some cases multiple zones.

Regardless of system size, one or more valve assemblies 10 can be plumbed into the distribution network to control the flow of heated water through the system. A single valve assembly 10 can be used to regulate water flow through a single radiator or baseboard heater. In some embodiments, each valve assembly 10 can be used to regulate water flow through several radiators or the like.

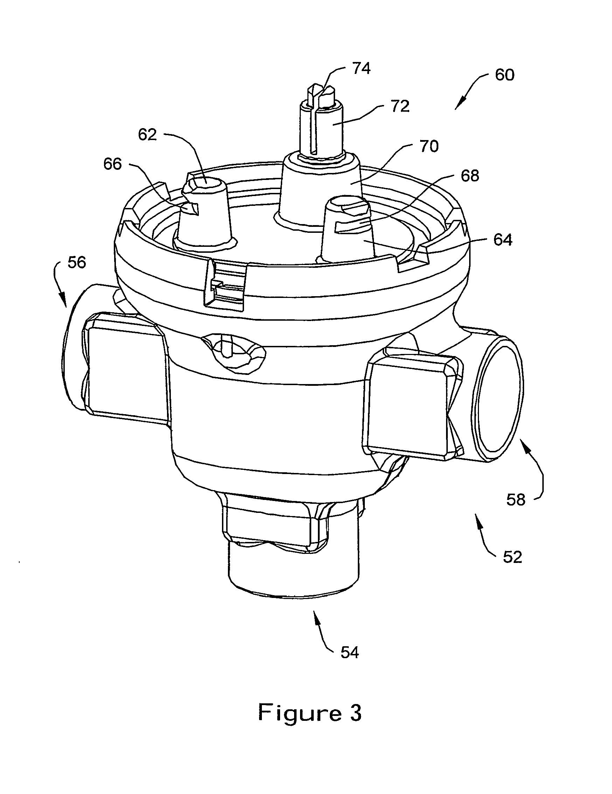

In the illustrative embodiment of Figure 1, valve 12 includes a first fluid connection 16 and a second fluid connection 18. Fluid flow through valve 12 can occur in either direction, although as illustrated, first fluid connection 16 can be referred to as inlet 16 and second fluid connection 18 can be referred to as outlet 18. In other embodiments, such as discussed in greater detail hereinafter and as illustrated for example in Figure 3, some valves can include three or more fluid connections. This can permit fluid to be diverted and continue to flow even if flow is stopped through a particular region of a distribution system. In addition, this can permit mixing of fluid from two of the inputs to the third, if desired.

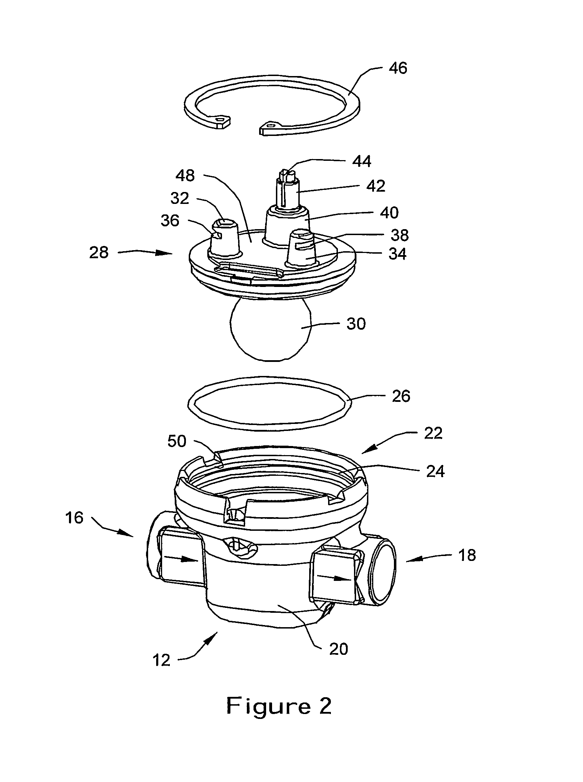

Valve 12 is best illustrated in Figure 2, which is an exploded perspective view showing the components within valve 12. Valve 12 includes a valve body 20 having an upper portion 22 that provides a seat 24 suitable for O-ring 26 to seal against. An upper valve assembly 28 including a globe valve 30 can rest within upper portion 22 against O-ring 26. Upper valve assembly 28 includes first and second mounting posts 32 and 34 having mounting slots 36 and 38, respectively, as will be discussed in greater detail with respect to actuator assembly 12.

Upper valve assembly 28 also includes a valve stem post 40 that includes an upper portion of a valve stem 42. Valve stem 42 can be operatively secured to globe Valve 30 and can be engaged by actuator assembly 14 to move globe valve 30 between open and closed positions. In the illustrated embodiment, valve stem post 40 includes a vertical slot 44 that can be engaged by actuator assembly 12 as will be discussed in greater detail hereinafter. However, it is contemplated that any other suitable engagement mechanism may be used, as desired. A snap ring 46 is configured to fit over a top surface 48 of upper valve assembly 28 and fits within a groove 50 within upper portion 22 to hold valve 12 together.

Figure 3 illustrates an alternate valve 52 that features a first fluid connection 54, a second fluid connection 56 and a third fluid connection 58. In this embodiment, it is intended that fluid that enters valve 52 by one of the three fluid connections 54, 56 or 58 can always exit through another of the three fluid connections 54, 56 or 58. For example, if fluid enters valve 52 through first fluid connection 54, the fluid can exit through either second fluid connection 56 and/or third fluid connection 58, depending on the specific position of a valve disposed within valve 52.

This feature is useful for example in heating systems that provide for recycle of heated water. Heated water can enter valve 52 through first fluid connection 54. If the valve is positioned to permit fluid flow out through second fluid connection 56, the heated water can exit through second fluid connection 56 and continue on to a radiator or the like and no fluid will flow through third fluid connection 58. If, however, the valve is positioned to permit fluid flow out through third fluid connection 58, the heated water can exit through third fluid connection 58 and can return via a recycle line to the source of heated water for subsequent reuse and no fluid will flow through second fluid connection 56. This is sometimes known as diverting water flow or volume control of the water flow. The three port valve of Figure 3 may also be used for mixing, where fluid from two of the ports are mixed and provided to the third port, if desired. When mixing, the valve may be positioned midway between the open and closed positions.

The upper portion 60 of valve 52 is similar to that described with respect to valve 12. First and second mounting posts 62 and 64 include mounting slots 66 and 68, respectively. A valve stem post 70 includes a valve stem 72 that is operatively connected to a valve (unseen) within valve 52. In the illustrated embodiment, valve stem post 70 further includes a vertical slot 74, but this is not required in all embodiments.

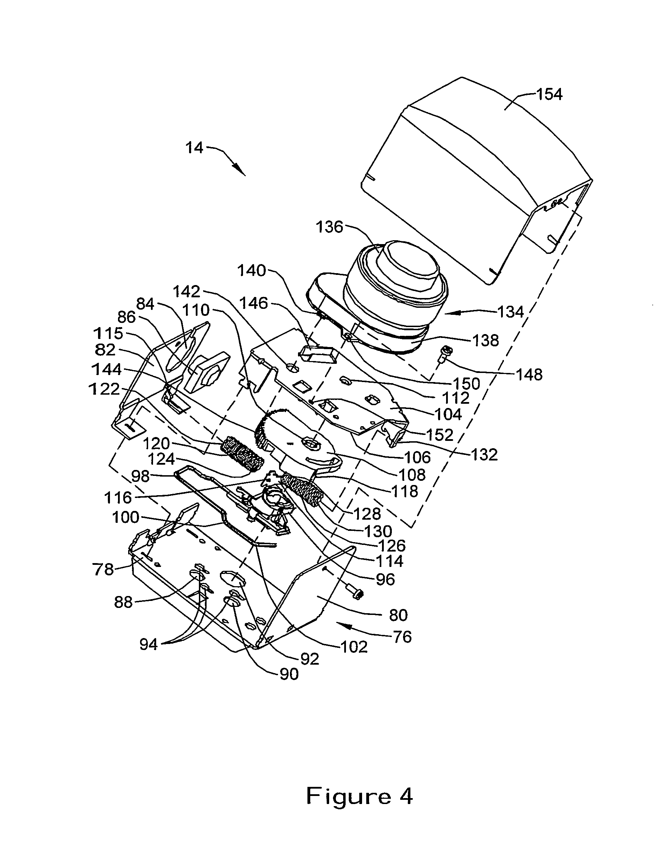

An illustrative embodiment of actuator assembly 14 is been seen in Figure 4, which is an exploded perspective view showing the components within actuator assembly 14. A lower housing 76 is formed from a lower plate 78 and a first side plate 80 that can be integrally formed with lower plate 78 or can be formed independently and then subsequently secured to lower plate 78 using any suitable technique such as crimping or soldering. A second side plate 82 having an aperture 84 completes lower housing 76. The second side plate 82 may be integrally formed with lower plate 78 or can be formed independently and then subsequently secured to lower plate 78 using any suitable technique such as crimping or soldering.

Depending on the wiring requirements of the motor and any sensors that may be employed within actuator assembly 14, a grommet 86 may or may not be present within aperture 84. For example, actuator assembly 14 may include a position sensor that can provide a thermostat with information regarding the relative position of the valve.

As illustrated, lower plate 78 includes a number of apertures of varying sizes. In particular, a first hole 88 is sized to permit first mounting post 32 (see Figure 2) to extend upwardly through lower plate 78. A second hole 90 is sized to permit second mounting post 34 (see Figure 2) to extend upwardly through lower plate 78. A somewhat larger third hole 92 is sized to permit valve stem post 40 (see Figure 2) to extend upwardly through lower plate 78.

Lower plate 78 further includes holes 94 that can be used to secure a retention clip 96 to lower plate 78. Retention clip 96 functions with a release spring 98 to releasably secure actuator assembly 14 to valve 12 (see Figure 1) as retention clip 96 snaps into holes 94 and secures release spring 98. In some embodiments, retention clip 96 can be configured to secure both sides of release spring 98. In other embodiments, as illustrated, retention clip 96 can be configured to secure a single side of release spring 98.

Lower plate 78 can be positioned over valve 12 such that first mounting post 32, second mounting post 34 and valve stem post 40 (see Figure 2) extend through holes 88, 90 and 92 as discussed above. Release spring 98 includes a first curved portion 100 that is configured and positioned to interact with mounting slot 36 of first mounting post 32 and a second curved portion 102 that is configured and positioned to interact with mounting slot 38 of second mounting post 34. In some embodiments, release spring 98 can also interact with a mounting slot (not illustrated) in valve stem post 40 (see Figure 2).

Release spring 98 can be biased into a position in which first curved portion 100 and second curved portion 102 extend into mounting slots 36 and 38, respectively. Depressing release spring 98 can cause first and second curved portions 100 and 102 to move out of engagement with mounting slots 36 and 38 so that actuator assembly 14 can be removed from valve 12.

Actuator assembly 14 also includes a motor mounting plate 104 that has an underside 106. A sector gear 108 having a raised pivot point 110 is mounted to underside 108 by extending raised pivot point 110 through an aperture 112 present in motor mounting plate 104. A pivot bar 114 having a first end 116 and a second end 118 fits within a slot (not illustrated) on the underside of sector gear 108.

A first spring 120 has a first end 122 and a second end 124. First end 122 of first spring 120 is secured to a mounting point 115 positioned on second side plate 82 while second end 124 of first spring 120 is secured to first end 116 of pivot bar 114. A second spring 126 has a first end 128 and a second end 130. First end 128 of second spring 126 is secured to second end 118 of pivot bar 114 while second end 130 of second spring 126 is secured to a mounting point 132 present on motor mounting plate 104.

A motor 134 is positioned atop motor mounting plate 104. Motor 134 includes a motor housing 136, a gear reduction section 138 and a pinion gear 140. Pinion gear 140 fits through an aperture 142 located in motor mounting plate 104 such that pinion gear 140 engages with a toothed section 144 of sector gear 108. In some embodiments, sector gear 108 can be considered as a gear assembly that is configured to engage a valve stem. In some embodiments, a gear assembly can be considered as including not only sector gear 108 but also gear reduction section 138 of motor 134.

When motor 134 is powered, pinion gear 140 engages toothed section 144 of sector gear 108 and drives sector gear 108 in a first direction that in some embodiments corresponds to opening globe valve 30 (see Figure 2). When sector gear 108 is driven in the first direction, first and second springs 120 and 126 can be extended or compacted from their equilibrium lengths. In the illustrated embodiment, both the first spring 120 and the second spring 126 extend from their equilibrium lengths when sector gear 108 is driven in the first direction.

After motor 134 has been powered to stall, and the motor 134 is no longer powered, the first spring 120 and the second spring 126 drive sector gear 108 in a second direction that in some embodiments corresponds to closing globe valve 30 (see Figure 2). In some embodiments, the motive force for driving sector gear 108 in the second direction is provided at least in part by the first spring 120 and the second spring 126 returning to their equilibrium length.

Motor 134 can include a first mounting flange (not illustrated) that interacts with securement flange 146 to help secure motor 134 to motor mounting plate 104. A screw or other fastening member 148 can extend through a second mounting flange 150 and into a mounting hole 152 to additionally secure motor 134 to motor mounting plate 104. Actuator assembly 14 also includes an upper housing 154.

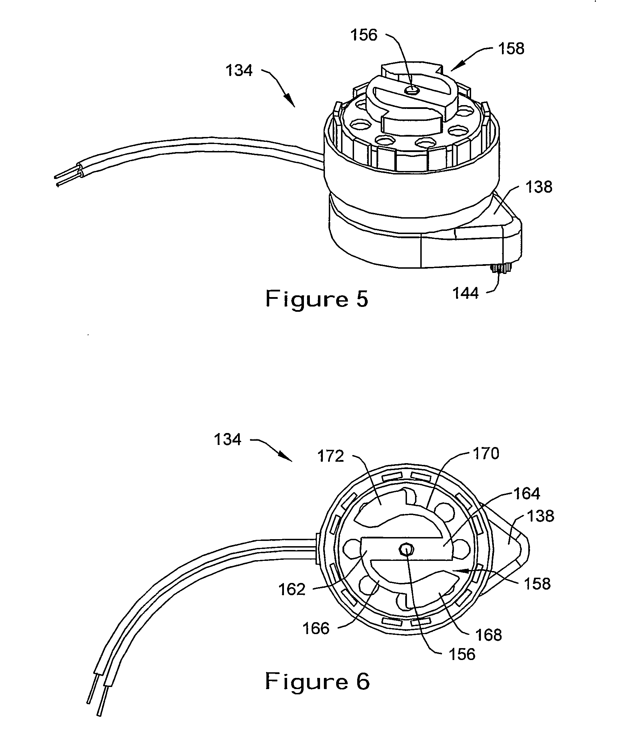

Motor 134 is best illustrated in Figures 5 and 6. Figure 5 is a perspective view and Figure 6 is a top view of motor 134 with motor housing 136 (see Figure 4) removed. In the illustrative embodiment, motor 134 has a radially centered shaft 156 that rotates with motor 134. A flexible structure 158 is centered on and mounted to radially centered shaft 156. As best seen in Figure 6, flexible structure 158 includes a straight portion 160 having a first end 162 and a second end 164. A first curved arm 166 having a thickened portion 168 extends from first end 162 of straight portion 160 and a second curved arm 170 having a thickened portion 172 extends from second end 164 of straight portion 160.

Flexible structure, or brake means, 158 can be formed of any suitable material. In some embodiments, flexible structure 158 can be formed of a material such as natural or synthetic rubber. In particular, flexible structure 158 can be formed of a. material that will permit first curved arm 166 and second curved arm 170 to move radially outward under centrifugal force as the rotational velocity of motor 134 increases. As first and second curved arms 166 and 170 continue to move radially outward in response to increasing rotational velocity, first and second thickened portions 168 and 172 can frictionally engage with the inside surface of motor housing 136 (see Figure 4) and can thus lessen or limit rotational velocity of motor 134 as measured as a rotational velocity of radially centered shaft 156.

In some embodiments, first and second curved arms 166 and 170 will move sufficiently far to permit first and second thickened portions 168 and 172 to frictionally engage the inside surface of motor housing 136 at a rotational velocity of the radially centered shaft 156 at about 1000 rpm. In some embodiments, the first and second thickened portions 168 and 172 may be adapted to frictionally engage the inside surface of motor housing 136 at a rotational velocity of the radially centered shaft 156 at about 900 rpm, at a rotational velocity of about 800 rpm, or less. While these rotational velocities are provided as examples, it is contemplated that the first and second thickened portions 168 and 172 may be adapted to frictionally engage the inside surface of the motor housing 136 (see Figure 4) at any suitable rotational velocity of the radially centered shaft 156, depending on the application.

In some embodiments, flexible structure 158 is configured to permit the biasing structure such as the first spring 120 and the second spring 126 (see Figure 4) to drive globe valve 130 (see Figure 2) from an open position to a closed position in a period of time sufficiently long to reduce or even eliminate water hammer. For example, and in some embodiments, flexible structure 158 may limit the closing time of the valve to at least about 4 seconds. In other embodiments, flexible structure 158 can limit the closing time of the valve to at least about 8 seconds, about 10 seconds, or even longer, as desired.

A motor 134 including gear reduction section 138 and flexible structure 158 is available commercially from, for example, SAM WOO, with part number 021 009. This particular motor is a 24 volt, 60 Hz motor using about 5 watts of power. This motor has a pinion gear speed, after gear reduction, of 4 rpm or 6 rpm when fully powered. However, other suitable motors are also available, as desired.

A valve assembly 10 exhibiting reduced or eliminated water hammer can be produced by combining valve 12 with actuator assembly 14 including motor 13 4 as described herein. For previously installed water delivery and water circulation systems, several methods are contemplated for retrofitting the valves to reduce or eliminate water hammer. In some embodiments, the original actuator assembly can be removed and a new actuator assembly, including motor 134, can be secured to the valve. In other embodiments, the original actuator assembly can be opened by removing upper housing 154 (see Figure 4), removing the originally installed motor by removing screw or other fastening mechanism 148, and installing a new motor 134.

In the above Figures, the brake mechanism is shown as a governor located inside the motor housing, which uses friction to limit the return speed of the valve. However, it is contemplated that the brake may be any sort of mechanism that limits the speed of valve movement, at least in one direction. For example, it is contemplated that the brake may include a governor that uses air pressure or magnetic forces to limit the valve speed. In one example, an electrical load may be selectively applied to the terminals of the motor, such as when the motor is not actively driven to close or open the valve. When the electrical load is applied to the terminals, the motor coils may have to drive the load when the motor turns, thus limiting the speed of motor and thus valve movement.

In another illustrative embodiment, the brake may include a transmission or the like that changes the gearing ratio of the actuator assembly depending on the direction of movement or speed of the valve. In another illustrative embodiment, an electrical drive signal may be applied to the motor one or more times while the motor is otherwise un-powered and the springs are closing the valve. In some embodiments, the electrical drive signal may include a number of sequential pulses. This may tend to selectively activate the motor, thus slowing the return speed of the motor and thus the valve.

It is contemplated that the present invention may also be applied to a variety of other actuators, such as damper actuators used to actuate air dampers within air ducts. The reduced return speed of the motor may, for example, reduce the return speed of the air damper, which may not only help reduce wear on the damper actuator, but may also help reduce damper blade speed for safety reasons.

The invention should not be considered limited to the particular examples described above, but rather should be understood to cover all aspects of the invention as set out in the attached claims. Various modifications, equivalent processes, as well as numerous structures to which the invention can be applicable will be readily apparent to those of skill in the art upon review of the instant specification.

## Claims

1. An actuator assembly (14) configured for securement to a valve (12) having a valve with a valve stem (40), the actuator assembly comprising:
a gear assembly (108) configured to engage the valve stem;
a motor (134) configured to drive the gear assembly in a first direction, the motor including a motor housing (136) and a radially centered shaft (156) that rotates with the motor;
biasing structure (20/26) configured to drive the gear assembly in a second direction; and
brake means (158) for reducing or limiting rotational velocity of the motor when the biasing structure is driving the gear assembly in the second direction;
wherein the brake means comprise a straight portion (160) having a first end (162), a second end (164) and a center therebetween, a first curved arm (166) extending from the first end (162), and a second curved arm (170) extending from the second end (164), wherein the center of the straight portion (160) is secured to the radially centered shaft (156) and wherein the first curved arm (166) comprises a first thickened portion (168) at an end opposite the straight portion and the second curved arm (170) comprises a second thickened portion (172) at an end opposite the straight portion.

2. The actuator assembly of claim 1, wherein the first thickened portion and the second thickened portion are configured to frictionally engage the motor housing under a predetermined amount of centrifugal force.

3. The actuator assembly of claim 1, wherein the brake means comprises a flexible material that moves outwardly under centrifugal force to frictionally engage the motor housing when the motor rotates at a speed greater than a predetermined threshold.

4. The actuator assembly of claim 1, wherein the biasing structure comprises one or more springs.

5. The actuator assembly of claim 4, wherein the one or more springs are configured to drive the gear assembly in a second direction at a speed that would cause water hammer if not impeded by the brake means.

6. The actuator assembly of claim 1, wherein the brake means limits the closing time of the valve to at least 4 seconds.

7. The actuator assembly of claim 1, wherein the brake means limits the closing time of the valve to at least 8 seconds.

## Patentansprüche

1. Stellgliedanordnung (14), die zur Befestigung an einem Ventil (12) konfiguriert ist und ein Ventil mit einem Ventilschaft (40) aufweist, wobei die Stellgliedanordnung Folgendes umfasst:
eine Zahnradanordnung (108), die zum Eingriff mit dem Ventilschaft konfiguriert ist;
einen Motor (134), der zum Antrieb der Zahnradanordnung in einer ersten Richtung konfiguriert ist, wobei der Motor ein Motorgehäuse (136) und eine radial zentrierte Welle (156) enthält, die sich mit dem Motor dreht;
eine Vorspannungsstruktur (120, 126), die zum Antrieb der Zahnradanordnung in einer zweiten Richtung konfiguriert ist; und
ein Bremsmittel (158) zur Verringerung oder Begrenzung der Drehgeschwindigkeit des Motors, wenn die Vorspannungsstruktur die Zahnradanordnung in der zweiten Richtung antreibt;
wobei das Bremsmittel einen geraden Teil (160) mit einem ersten Ende (162), einem zweiten Ende (164) und einer Mitte dazwischen, einen ersten gekrümmten Arm (166), der sich von dem ersten Ende (162) aus erstreckt, und einen zweiten gekrümmten Arm (170), der sich von dem zweiten Ende (164) aus erstreckt, aufweist, wobei die Mitte des geraden Teils (160) an der radial zentrierten Welle (156) befestigt ist und wobei der erste gekrümmte Arm (166) einen ersten verdickten Teil (168) an einem Ende gegenüber dem geraden Teil umfasst und der zweite gekrümmte Arm (170) einen zweiten verdickten Teil (172) an einem Ende gegenüber dem geraden Teil umfasst.

2. Stellgliedanordnung nach Anspruch 1, wobei der erste verdickte Teil und der zweite verdickte Teil dazu konfiguriert sind, das Motorgehäuse unter einer vorbestimmten Zentrifugalkraftgröße in Reibeingriff zu nehmen.

3. Stellgliedanordnung nach Anspruch 1, wobei das Bremsmittel ein flexibles Material umfasst, das sich unter der Zentrifugalkraft nach außen bewegt, um das Motorgehäuse in Reibeingriff zu nehmen, wenn sich der Motor mit einer Geschwindigkeit dreht, die größer ist als ein vorbestimmter Schwellwert.

4. Stellgliedanordnung nach Anspruch 1, wobei die Vorspannungsstruktur eine oder mehrere Federn umfasst.

5. Stellgliedanordnung nach Anspruch 4, wobei die eine oder die mehreren Federn dazu konfiguriert sind, die Zahnradanordnung in einer zweiten Richtung mit einer Geschwindigkeit anzutreiben, die Wasserschlag verursachen würde, wenn sie nicht durch das Bremsmittel gebremst werden würde.

6. Stellgliedanordnung nach Anspruch 1, wobei das Bremsmittel die Schließzeit des Ventils auf mindestens 4 Sekunden begrenzt.

7. Stellgliedanordnung nach Anspruch 1, wobei das Bremsmittel die Schließzeit des Ventils auf mindestens 8 Sekunden begrenzt.

## Revendications

1. Ensemble d'actionneur (14) configuré de manière à être fixé à une vanne (12) formée d'une vanne avec une tige de vanne (40), l'ensemble d'actionneur comprenant :
un ensemble d'engrenage (108) configuré pour venir en prise avec la tige de vanne ;
un moteur (134) configuré pour entraîner l'ensemble d'engrenage dans une première direction, le moteur comportant un logement de moteur (136) et un arbre centré radialement (156) qui tourne avec le moteur ;
une structure de poussée (120, 126) configurée pour entraîner l'ensemble d'engrenage dans une deuxième direction ; et
un moyen de freinage (158) pour réduire ou limiter la vitesse de rotation du moteur lorsque la structure de poussée entraîne l'ensemble d'engrenage dans la deuxième direction ;
le moyen de freinage comprenant une portion droite (160) ayant une première extrémité (162), une deuxième extrémité (164) et un centre entre elles, un premier bras courbe (166) s'étendant depuis la première extrémité (162) et un deuxième bras courbe (170) s'étendant depuis la deuxième extrémité (164), le centre de la portion droite (160) étant fixé à l'arbre centré radialement (156) et le premier bras courbe (166) comprenant une première portion épaissie (168) à une extrémité opposée à la portion droite et le deuxième bras courbe (170) comprenant une deuxième portion épaissie (172) à une extrémité opposée à la portion droite.

2. Ensemble d'actionneur selon la revendication 1, dans lequel la première portion épaissie et la deuxième portion épaissie sont configurées pour s'engager par friction avec le logement du moteur sous l'effet d'une force centrifuge d'intensité prédéterminée.

3. Ensemble d'actionneur selon la revendication 1, dans lequel le moyen de freinage comprend un matériau flexible qui se déplace vers l'extérieur sous l'effet de la force centrifuge pour venir en prise par friction avec le logement de moteur lorsque le moteur tourne à une vitesse supérieure à un seuil prédéterminé.

4. Ensemble d'actionneur selon la revendication 1, dans lequel la structure de poussée comprend un ou plusieurs ressorts.

5. Ensemble d'actionneur selon la revendication 4, dans lequel le ou les ressorts sont configurés de manière à entraîner l'ensemble d'engrenage dans une deuxième direction à une vitesse qui provoquerait un coup de bélier de l'eau si le moyen de freinage ne l'empêchait pas.

6. Ensemble d'actionneur selon la revendication 1, dans lequel le moyen de freinage limite le temps de fermeture de la vanne à au moins 4 secondes.

7. Ensemble d'actionneur selon la revendication 1, dans lequel le moyen de freinage limite le temps de fermeture de la vanne à au moins 8 secondes.
